# EUROPEAN PATENT APPLICATION

(11) **EP 2 518 489 A1**
(43) Date of publication of application: **31.10.2012**
(21) Application number: 10845684.9
(22) Date of filing: 12.02.2010
(51) Int. Cl.: G01N 30/08, G01N 30/00, G01N 30/04

(54) **METHOD FOR COLLECTING SAMPLE AND DEVICE FOR COLLECTING SAME**

(71) Applicant: GL Sciences Incorporated, Tokyo 163-1130 (JP)
(72) Inventor: SOTOMARU, Katsuhiko, Iruma-shi Saitama 358-0032 (JP); ZHOU, Xiao-jing, Iruma-shi Saitama 358-0032 (JP); YAMASAKI, Kazuhiko, Iruma-shi Saitama 358-0032 (JP); SATO, Atsushi, Fukusima-shi Fukushima 960-8201 (JP)
(74) Representative: Schmid, Wolfgang
(86) International application number: PCT/JP2010/000887
(87) International publication number: WO 2011/099079

(57) **Abstract**

An object of the present invention is to provide a sample trapping method and a sample trapping apparatus. The present invention is suitable, for example, for analysis by a gas chromatograph-mass spectrometer. A sample is not cooled by a refrigerant such as liquid nitrogen in the present invention. Instead, a cold storage refrigerator such as a Stirling refrigerator or a Gifford-McMahon refrigerator is used. As a result, the operability is improved and the running cost is reduced. In addition, a refrigerant pipe is not used in the present invention. It is thus possible to reduce the size and weight of the apparatus, to improve the efficiency and accuracy for cooling the sample, and to rapidly cool the sample. Furthermore, it is possible to rapidly heat the sample. As a result, the trapped sample is instantaneously desorbed. Therefore, the present invention makes it possible to achieve cryofocusing in gas chromatography (particularly in high-speed gas chromatography).

Solutions of the present invention include a sample trapping method using a sample conduit for trapping a gas sample by cooling or desorbing the gas sample by heating. The solutions further include cooling a sample conduit (17) by arranging the sample conduit (17) in the vicinity of, or bringing the sample conduit (17) into contact with, a cooling part of a cooling device (20) based on a cold storage refrigerator.

## Description

### TECHNICAL FIELD

The present invention relates to a sample trapping method and a sample trapping apparatus. The present invention is suitable for, for example, analysis by a gas chromatograph-mass spectrometer (hereinafter referred to as "GC/MS") or the like. In the present invention, a sample is cooled not by a refrigerant such as liquid nitrogen but by a cold storage refrigerator such as a Stirling refrigerator or a Gifford-McMahon refrigerator. This improves the operability and reduces the running cost. In addition, a refrigerant pipe is not used in the present invention. It is thus possible to reduce the size and weight of the apparatus, to improve the efficiency and accuracy for cooling the sample, and to rapidly cool the sample. Furthermore, it is possible to rapidly heat the sample. As a result, the trapped sample is instantaneously desorbed. Therefore, the present invention makes it possible to achieve cryofocusing in gas chromatography (particularly in high-speed gas chromatography).

### BACKGROUND ART

When a GC/MS is used to analyze a sample such as low-concentration organic compounds in the atmosphere, the sample is concentrated and trapped in advance for analysis. One of the analyzing methods is based on cold-trapping.
A glass tubing is used in the cold-trapping method. The glass tubing adsorbs a sample gas thereon and supplies the adsorbed sample to an analytical instrument. A heater is wound around the periphery of the glass tubing. After the adsorption of the sample, the glass tubing is rapidly heated to desorb the adsorbed sample within a short time.

An aluminum block may be arranged outside the glass tubing. A passage for a refrigerant such as liquid nitrogen is provided inside the block. Upon trapping, the sample is sent to a predetermined area of the glass tubing. At this time, the glass tubing is cooled by introducing liquid nitrogen into the refrigerant passage. As a result, the sample is cold-trapped in an adsorbing material of the glass tubing, concentrated and adsorbed thereon (see, for example, Fig. 2 of Patent Document 1).

In such a method, however, a refrigerant such as liquid nitrogen is used to cool the sample. Therefore, it is necessary to manage the refrigerant pipe and a complicated system for supplying the refrigerant. This causes problems of the operability and a huge running cost. Furthermore, it is necessary to cool and heat the glass tubing. This causes a problem of energy loss. It is difficult to rapidly cool or heat the glass tubing. Therefore, for example, there is also a problem in that desired desorption and condensation/adsorption cannot be achieved in a short time.

Meanwhile, there is also a method for cooling a sample without using a refrigerant. In this method, an electronic cooling element is used. Instead of the block described above, a cooling block is arranged around the glass tubing. The cooling block is in contact with a cooling side of the electronic cooling element. A radiation fin is arranged in a heating side of the cooling block.
The glass tubing is cooled by a cooling function of the electronic cooling element. As a result, the sample is cold-trapped in an adsorbing material of the glass tubing, concentrated and adsorbed thereon. The glass tubing is rapidly heated after the condensation/adsorption, whereby the adsorbed sample is desorbed in a short time (see, for example, Fig. 3 of Patent Document 1).

In this method, however, it takes some time to cool the electronic cooling element. In addition, the electronic cooling element has a limited heat resistance. Since the electronic cooling element itself is heated after cooling, the glass tubing is heated only to a limited temperature. Therefore, the rapid heating is restricted. The electronic cooling element is also subject to strain due to temperature cycles of heating and cooling. This causes a problem in that the durability of the element is deteriorated. It has been necessary, therefore, to use the electronic cooling element at a limited heating temperature therefor, in order to avoid the influence of the heat strain.

There is also a method in which the heating temperature for the electronic cooling element is not limited. In this method, a first block made of aluminum is arranged around the glass tubing so as to surround a heater. The cooling block, the electronic cooling element and the heat dissipation fin are moved closer to and away from the first block by a lift mechanism. To adsorb a sample, the lift mechanism is driven to bring the cooling block into contact with the first block. This cools the first block, which in turn cools the glass tubing. As a result, the sample is cold-trapped in an adsorbing material of the glass tubing, concentrated and adsorbed thereon.

After the sample is adsorbed in this manner, the lift mechanism is moved in the direction opposite to the direction of adsorption. As a result, the cooling block is separated from the first block and stops cooling the first block. The glass tubing is then heated, whereby the adsorbed sample is desorbed therefrom. The adsorbed sample is delivered into an analytical instrument sent by carrier gas (see, for example, Fig. 1 of Patent Document 1).

In this method, the influence exerted by the heating of the electronic cooling element is somewhat alleviated. Nonetheless, it takes some time to cool the electronic cooling element. This makes it difficult to rapidly cool the element. Although the heating restriction of the glass tubing is alleviated, rapid heating is difficult. Therefore, there is a problem in that insufficient condensation/adsorption and desorption of the sample lead to unreliable analytical results.
The electronic cooling element has a low cooling capability. Therefore, for example, there is also a problem in that, in the case where the adsorbing material is not packed, the efficiency for trapping volatile organic components is extremely low.

There is another method for cooling a sample without using a refrigerant. This method is capable of solving the above problems concerning the refrigerant such as liquid nitrogen. In this method, a cold storage refrigerator such as a Gifford-McMahon refrigerator, a Stirling refrigerator, a pulse-tubing refrigerator, a Vuilleumier refrigerator, or a Solvay refrigerator is used. This refrigerator subjects a low-temperature operating gas to heat exchange, thereby adjusting the temperature of the operating gas. The operating gas at the adjusted temperature is taken out and blown onto a gas component trapping tubing arranged in a low-temperature trapping part of a gas chromatograph. The sample is introduced into the trapping tubing and cold-trapped therein. As a result, target gas components are liquefied, condensed and trapped (see, for example, Patent Document 2).

This method is capable of solving the problems of the operability and the running cost by using the cold storage refrigerator. In order to cool the sample, however, it is necessary to arrange a gas supply pipe extending from the refrigerator to the analytical instrument. This makes it necessary to secure a space for installing the pipe and to perform the pipe installation. This leads to an increase in the size and cost of the facility. Furthermore, the temperature of the operating gas rises while the operating gas is supplied. Therefore, the blowing temperature rises, thereby lowering the cooling accuracy and the cooling efficiency. In addition, the sample cannot be rapidly cooled. This method only cools the sample. Therefore, for example, this method has a problem in that it is not possible to desorb the trapped sample by heating.

### CITATION LIST

### PATENT DOCUMENT

Patent Document 1: JP-A-8-327615
Patent Document 2: JP-A-2007-183252

### SUMMARY OF THE INVENTION

### PROBLEMS TO BE SOLVED BY THE INVENTION

An object of the present invention is to provide a sample trapping method and a sample trapping apparatus capable of solving the above-mentioned problems. The present invention is suitable, for example, for analysis by a GC/MS. A sample is not cooled by a refrigerant such as liquid nitrogen in the present invention. Instead, a cold storage refrigerator such as a Stirling refrigerator or a Gifford-McMahon refrigerator is used. As a result, the operability is improved and the running cost is reduced. In addition, a refrigerant pipe is not used in the present invention. It is thus possible to reduce the size and weight of the apparatus, to improve the efficiency and accuracy for cooling the sample, and to rapidly cool the sample. Furthermore, it is possible to rapidly heat the sample. As a result, the trapped sample is instantaneously desorbed. Therefore, the present invention makes it possible to achieve cryofocusing in gas chromatography (particularly in high-speed gas chromatography).

### SOLUTIONS TO THE PROBLEMS

According to claim 1 of the present invention, there is provided a sample trapping method using a sample conduit for trapping a gas sample by cooling or desorbing the gas sample by heating, wherein the sample conduit is cooled by being arranged in the vicinity of, or being brought into contact with, a cooling part of a cooling device based on a cold storage refrigerator. This method can achieve good operability compared to the conventional cooling method using an electronic cooling element or a refrigerant such as liquid nitrogen. The running cost can also be reduced. Since a refrigerant pipe is not used, it is further possible to reduce the size and weight of the apparatus, to improve the efficiency and accuracy for cooling the sample, and to rapidly cool the sample. It is thus possible to achieve cryofocusing in gas chromatography (particularly in high-speed gas chromatography).
According to claim 2 of the present invention, a heating part of a heating device is arranged to meet the cooling part, and is heated after the gas sample is cooled. By arranging the heating part near the cooling part, it is possible to cope with the rapid heating. In addition, since there is no temperature restriction in the cooling part unlike in the conventional case, the heating part can be heated to a high temperature. It is thus possible to achieve the rapid heating.
According to claim 3 of the present invention, the sample conduit is cooled or heated by moving any one or both of the cooling part and the heating part closer to, and away from, the sample conduit. This enables reasonable and efficient cooling or heating with the energy loss reduced. It is further possible to achieve cooling and heating rapidly by moving both the cooling part and the heating part closer to and away from the sample conduit. As a result, the rapid cooling and the rapid heating can be achieved.

According to claim 4 of the present invention, the sample conduit is arranged by being embedded in any one of the cooling part and the heating part to thereby cool or heat the sample conduit. This improves the efficiency for cooling or heating the sample conduit. Therefore, the rapid cooling and the rapid heating are promoted. In addition, the installation space for the sample conduit is reduced. As a result, the size of the cooling device or the heating device is reduced.
According to claim 5 of the present invention, the sample conduit is cooled and heated rapidly to cryofocus the gas sample, and the trapped sample is desorbed. As a result, the sample is introduced into a separation column with a narrow bandwidth. It is thus possible to achieve cryofocusing in gas chromatography.
According to claim 6 of the present invention, the sample conduit is a hollow capillary tubing. This type of conduit contains no packing material or adsorbing material packed therein. Therefore, the amount of carrier gas used for heating and desorption can be reduced. This can suppress the dilution of the sample and the widening of a sample band, which are caused by the carrier gas. It is thus possible to trap the sample by cryofocusing and to introduce the sample into the separation column with a narrow bandwidth by rapid heating.

According to claim 7 of the present invention, the sample conduit and one or a plurality of separation columns are arranged in one or a plurality of gas chromatographic thermostats, the cooling part and the heating part are arranged to meet the sample conduit between the separation columns, and the separated gas sample is cooled and heated. With a simple configuration, therefore, the widening of a sample band is suppressed. Liquid nitrogen or carbon dioxide is not used unlike in the conventional case. It is thus possible to construct a small two-dimensional gas chromatography system that is highly accurate and practical.
According to claim 8 of the present invention, in a purge-and-trap method, a head space method, or preparative gas chromatography, a low-concentration gas sample containing volatile components or semivolatile components is rapidly cooled and heated. As a result, cryofocusing in gas chromatography can be achieved.

According to claim 9 of the present invention, there is provided a sample trapping apparatus including a sample conduit for trapping a gas sample by cooling or desorbing the gas sample by heating, wherein the sample conduit is cooled by being arranged in the vicinity of, or being brought into contact with, a cooling part of a cooling device based on a cold storage refrigerator. This apparatus can achieve good operability compared to the conventional cooling method using an electronic cooling element or a refrigerant such as liquid nitrogen. The running cost can also be reduced. Since a refrigerant pipe is not used, it is further possible to reduce the size and weight of the apparatus, to improve the efficiency and accuracy for cooling the sample, and to rapidly cool the sample. It is thus possible to achieve cryofocusing in gas chromatography.
According to claim 10 of the present invention, a heating part of a heating device is arranged near the cooling part, any one or both of the cooling part and the heating part are provided to be movable closer to and away from the sample conduit, and the sample conduit is provided so as to be cooled and heated. This enables reasonable and efficient cooling or heating with the energy loss reduced. It is further possible to achieve cooling and heating rapidly by moving both the cooling part and the heating part closer to and away from the sample conduit. As a result, the rapid cooling and the rapid heating can be achieved.
According to claim 11 of the present invention, the sample conduit is embedded in the cooling part or the heating part so that the sample conduit is cooled or heated. This improves the efficiency for cooling or heating the sample conduit. Therefore, the rapid cooling and the rapid heating are promoted. In addition, the installation space for the sample conduit is reduced. As a result, the size of the cooling device or the heating device is reduced.
According to claim 12 of the present invention, the outer surface of the sample conduit is partially covered with an electric heating part, and an electric insulating part is provided on the outer surface of the electric heating part or between the heating part and the electric heating part. This ensures the safety in use of the heating part.
According to claim 13 of the present invention, the sample conduit and the cooling part are arranged in a thermostat for preparative gas chromatography, and the sample conduit is in close contact with or apart from the cooling part such that the sample conduit can be cooled. This makes it possible to trap the gas sample according to the boiling temperature thereof.

According to claim 14 of the present invention, a metallic sample conduit having an deactivated inner surface is arranged in the thermostat for preparative gas chromatography, the cooling part includes a groove in which the sample conduit can be arranged, and the sample conduit is in close contact with or apart from the groove such that the sample conduit can be cooled. With this configuration, the sample conduit is efficiently cooled according to the boiling temperature of the gas sample. This makes it possible to trap the target components quickly.
According to claim 15 of the present invention, the sample conduit, the cooling part, and the heating part are arranged in a thermostat. With this configuration, the gas sample is rapidly cooled and heated in the thermostat. It is thus possible to achieve cryofocusing in gas chromatography, the cryofocusing involving highly accurate trapping.
According to claim 16 of the present invention, the sample conduit and one or a plurality of separation columns are arranged in one or a plurality of gas chromatographic thermostats, and the cooling part and the heating part are arranged to meet the sample conduit between the separation columns. With this configuration, the separated gas sample can be cooled and heated. With a simple configuration, therefore, the widening of a sample band is suppressed. Liquid nitrogen or carbon dioxide is not used unlike in the conventional case. It is thus possible to construct a small two-dimensional gas chromatography system that is highly accurate and practical.
According to claim 17 of the present invention, the cooling device is based on a Stirling refrigerator or a Gifford-McMahon refrigerator. Since the refrigerator used has a high thermal efficiency, it is possible to achieve cryofocusing in gas chromatography.

### EFFECTS OF THE INVENTION

Claim 1 of the present invention is a method in which a sample conduit is cooled by being arranged in the vicinity of, or being brought into contact with, a cooling part of a cooling device based on a cold storage refrigerator. This method can achieve good operability compared to the conventional cooling method using an electronic cooling element or a refrigerant such as liquid nitrogen. The running cost can also be reduced. Since a refrigerant pipe is not used, it is further possible to reduce the size and weight of the apparatus, to improve the efficiency and accuracy for cooling the sample, and to rapidly cool the sample. It is thus possible to achieve cryofocusing in gas chromatography.
According to claim 2 of the present invention, a heating part of a heating device is arranged to meet the cooling part, and is heated after the gas sample is cooled. By arranging the heating part near the cooling part, it is possible to cope with the rapid heating. In addition, since there is no temperature restriction in the cooling part unlike in the conventional case, the heating part can be heated to a high temperature. It is thus possible to achieve the rapid heating.
According to claim 3 of the present invention, the sample conduit is cooled or heated by moving any one or both of the cooling part and the heating part closer to, and away from, the sample conduit. This enables reasonable and efficient cooling or heating with the energy loss reduced. It is further possible to achieve cooling and heating rapidly by moving both the cooling part and the heating part closer to and away from the sample conduit. As a result, the rapid cooling and the rapid heating can be achieved.

According to claim 4 of the present invention, the sample conduit is arranged by being embedded in any one of the cooling part and the heating part to thereby cool or heat the sample conduit. This improves the efficiency for cooling or heating the sample conduit. Therefore, the rapid cooling and the rapid heating are accelerated. In addition, the installation space for the sample conduit is reduced. As a result, the size of the cooling device or the heating device can be reduced
According to claim 5 of the present invention, the sample conduit is cooled and heated rapidly to cryofocus the gas sample, and the trapped sample is desorbed. As a result, the sample can be introduced into a separation column with a narrow bandwidth. It is thus possible to achieve cryofocusing in gas chromatography.
According to claim 6 of the present invention, the sample conduit is a hollow capillary tubing. This type of conduit contains no trapping materials or adsorbing materials packed therein. Therefore, the amount of carrier gas used during heating and desorption can be reduced. This can suppress the dilution of the sample and the widening of a sample band, which are caused by the carrier gas. It is thus possible to trap the sample by cryofocusing and to introduce the sample into the separation column with a narrow bandwidth by rapid heating.

According to claim 7 of the present invention, the sample conduit and one or a plurality of separation columns are arranged in one or a plurality of gas chromatographic thermostats, the cooling part and the heating part are arranged to meet the sample conduit between the separation columns, and the separated gas sample is cooled and heated. With a simple configuration, therefore, the widening of a sample band is suppressed. Liquid nitrogen or carbon dioxide is not used unlike in the conventional case. It is thus possible to construct a small two-dimensional gas chromatography system that is highly accurate and practical.
According to claim 8 of the present invention, in a purge-and-trap method, a head space method, or preparative gas chromatography, a low-concentration gas sample containing volatile components or semivolatile components is trapped. Therefore, the trapping in various analyses is carried out through rapid cooling and rapid heating. As a result, cryofocusing in gas chromatography can be achieved.

According to claim 9 of the present invention, a sample conduit is cooled by being arranged in the vicinity of, or being brought into contact with, a cooling part of a cooling device based on a cold storage refrigerator. This can achieve good operability compared to the conventional cooling method using an electronic cooling element or a refrigerant such as liquid nitrogen. The running cost can also be reduced. Since a refrigerant pipe is not used, it is further possible to reduce the size and weight of the apparatus, to improve the efficiency and accuracy for cooling the sample, and to rapidly cool the sample. It is thus possible to achieve cryofocusing in gas chromatography.
According to claim 10 of the present invention, a heating part of a heating device is arranged near the cooling part, any one or both of the cooling part and the heating part are provided to be movable closer to and away from the sample conduit, and the sample conduit is provided so as to be cooled and heated. This enables reasonable and efficient cooling or heating with the energy loss reduced. It is further possible to achieve cooling and heating rapidly by moving both the cooling part and the heating part closer to and away from the sample conduit. As a result, the rapid cooling and the rapid heating can be achieved.
According to claim 11 of the present invention, the sample conduit is embedded in the cooling part or the heating part so that the sample conduit is cooled or heated. This improves the efficiency for cooling or heating the sample conduit. Therefore, the rapid cooling and the rapid heating are accelerated. In addition, the installation space for the sample conduit is reduced. As a result, the size of the cooling device or the heating device can be reduced.

According to claim 12 of the present invention, the outer surface of the sample conduit is partially covered with an electric heating part, and an electric insulating part is provided on the outer surface of the electric heating part or between the heating part and the electric heating part. This ensures the safety in use of the heating part.
According to claim 13 of the present invention, the sample conduit and the cooling part are arranged in a thermostat for preparative gas chromatography, and the sample conduit is in close contact with or apart from the cooling part such that the sample conduit can be cooled. This makes it possible to trap the gas sample according to the boiling temperature thereof.
According to claim 14 of the present invention, a metallic sample conduit having an deactivated inner surface is arranged in the thermostat for preparative gas chromatography, the cooling part includes a groove in which the sample conduit can be arranged, and the sample conduit is in close contact with or apart from the groove such that the sample conduit can be cooled. With this configuration, the sample conduit is efficiently cooled according to the boiling temperature of the gas sample. This makes it possible to trap the target components quickly.
According to claim 15 of the present invention, the sample conduit, the cooling part, and the heating part are arranged in the thermostat. With this configuration, the gas sample is rapidly cooled and heated in the thermostat. It is thus possible to achieve cryofocusing in gas chromatography involving highly accurate trapping.
According to claim 16 of the present invention, the sample conduit and one or a plurality of separation columns are arranged in one or a plurality of gas chromatographic thermostats, and the cooling part and the heating part are arranged to meet the sample conduit between the separation columns. With this configuration, the separated gas sample can be cooled and heated. With a simple configuration, therefore, the widening of a sample band is suppressed. Liquid nitrogen or carbon dioxide is not used unlike in the conventional case. It is thus possible to construct a small two-dimensional gas chromatography system that is highly accurate and practical.
According to claim 17 of the present invention, the cooling device is based on the Stirling refrigerator or the Gifford-McMahon refrigerator. Since the refrigerator used has a high thermal efficiency, it is possible to achieve cryofocusing in gas chromatography.

### BRIEF DESCRIPTION OF THE DRAWINGS

Fig. 1 is an explanatory diagram illustrating the trapping operation of the present invention applied into a purge-and-trap method.
Fig. 2 is a front view illustration, in enlargement, a cooling device and a heating device according to the present invention, and illustrating the operation for cooling a sample gas conduit.

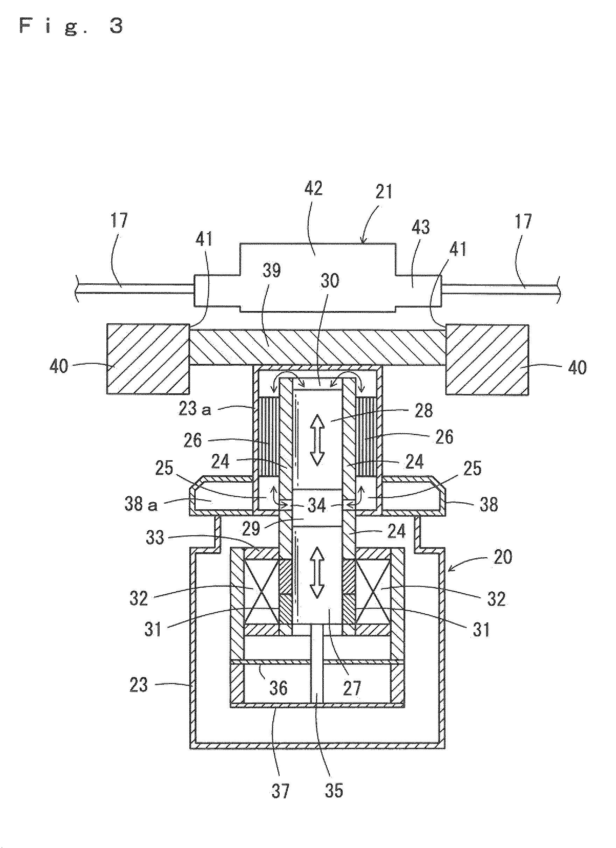

Fig. 3 is a cross-sectional view illustration, in enlargement, an exemplary cooling device according to the present invention.

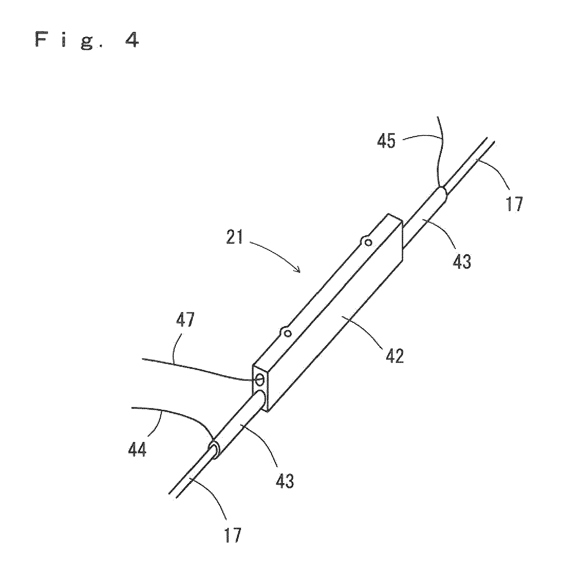

Fig. 4 is an oblique view illustrating a heating device according to the present invention.

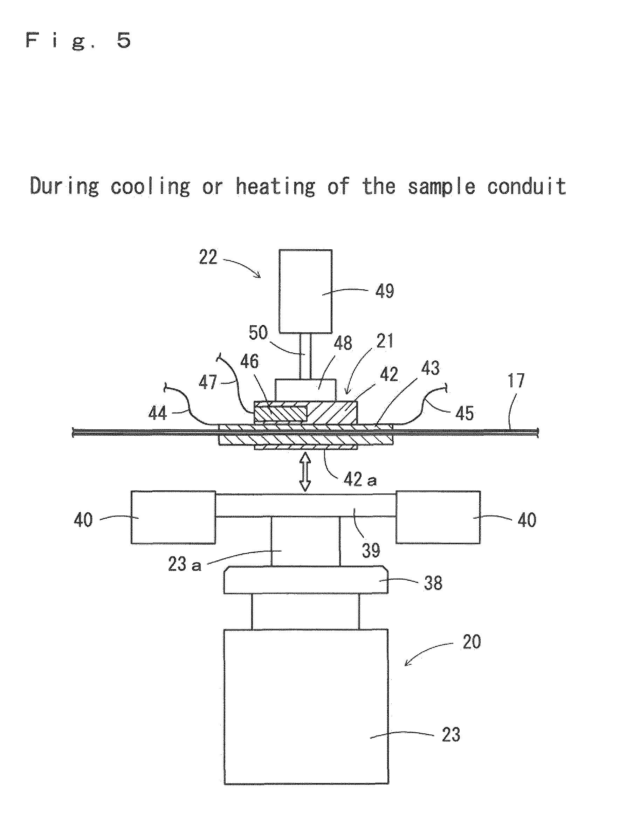

Fig. 5 is a view illustrating the operation for cooling and heating a sample conduit by the cooling device and the heating device according to the present invention.

Fig. 6 is a diagram illustrating the trapping operation by a canister-GC/MS method according to a second embodiment of the present invention.
Fig. 7 is a diagram illustrating the trapping operation by a head-space method according to a third embodiment of the present invention.
Fig. 8 is a diagram illustrating the trapping operation by one-dimensional and two-dimensional separation columns arranged in a thermostat, and a cooling device and a heating device arranged between the columns according to a fourth embodiment of the present invention.
Fig. 9 is a view illustrating the trapping operation by a cooling part of a cooling device according to a fifth embodiment of the present invention, the cooling part being provided with heat-exchange means and arranged in a thermostat.

Fig. 10(a) is a plan view of the heat-exchange means illustrated in Fig. 9. Fig. 10(b) is a front view of the heat-exchange means illustrated in Fig. 9.
Fig. 11(a) is a plan view of another form of the heat-exchange means illustrated in Fig. 10. Fig. 11(b) is a front view of the another form of the heat-exchange means illustrated in Fig. 10.
Fig. 12 is an explanatory diagram illustrating a cooling device according to a sixth embodiment of the present invention, the cooling device being arranged in an intermediate-to-low-temperature thermostat of a preparative gas chromatograph.

Fig. 13 is an oblique view illustrating an example of installing the cooling device according to the sixth embodiment.
Fig. 14(a) is an exploded oblique view illustrating another example of installing a dispensing tubing according to an applied form of the sixth embodiment, and Fig. 14(b) is an enlarged plan view illustrating the dispensing tubing installed in close contact with an endothermic fin of heat-exchange means.
Fig. 15 is an oblique view illustrating another example of installing the cooling device according to another applied form of the sixth embodiment.
Fig. 16 is an oblique view illustrating connecting tubings tightly coupled to dispensing tubings according to another applied form of the sixth embodiment, wherein Fig. 16(a) illustrates a connecting tubing made of glass coupled to a dispensing tubing made of metal, and Fig. 16(b) illustrates a connecting tubing made of glass coupled to a dispensing tubing made of metal via a joint tubing made of synthetic resin.

### DESCRIPTION OF EMBODIMENTS

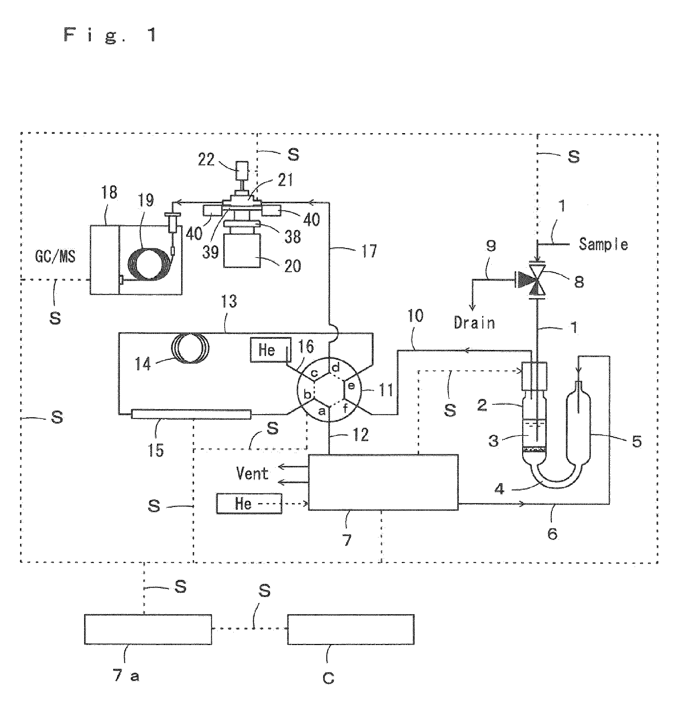

An embodiment of the present invention applied to an analysis of environmental pollutants in river water by a purge-and-trap method will be described below with reference to the drawings. Fig. 1 illustrates a sample supply pipe 1. One end of the sample supply pipe 1 communicates with a storage vessel (not illustrated) for a sample to be analyzed. The other end thereof communicates with a sample tubing 2 that can be heated. The sample tubing 2 contains a sample to be analyzed 3, namely, river water containing volatile organic compounds (hereinafter referred to as "VOCs").

A lower end of the sample tubing 2 communicates with a purge gas tubing 5 via a conduit 4. The purge gas tubing 5 is connected to one end of a purge gas conduit 6. The other end of the purge gas conduit 6 is connected to a gas controller 7. The gas controller 7 is capable of controlling the flow rate and pressure of inert gas such as helium gas on the basis of commands from a computer C via an electric system controller 7a. The gas controller 7 is also capable of controlling a flow passage at a switching valve described later.
A vent is formed on one side of the gas controller 7. Connected to the opposite side is the purge gas conduit communicating with a purge gas source. The drawing also illustrates an on-off valve 8 interposed in the sample supply pipe 1. A drain pipe 9 is connected to one end of the on-off valve 8.

One end of a communicating pipe 10 is connected to the sample tubing 2. The other end thereof is connected to a switching valve 11. The VOCs in the sample 3 to be analyzed can be introduced into the switching valve 11 by purge. The switching valve 11 and the gas controller 7 are coupled to each other via a guide conduit 12.
The switching valve 11 includes a six-port switching valve. The ports can be switched after the VOCs are trapped. The guide conduit 12 is connected to the port a. A moisture remover and a trapping tubing 15 that is packed with a packing material are connected between the port b and the port e.
The moisture remover 14 and the trapping tubing 15 that is packed with the trapping material are connected via a conduit 13 provided with a heating part. The communicating pipe 10 can be connected to the port f.

The port c is connected to a carrier gas conduit 16 to allow the inert gas such as helium gas to be introduced into the conduit 16. A trapping conduit 17 is a hollow capillary tubing that serves as a sample conduit having one end connected to the port d. The other end of the trapping conduit 17 is connected to a sample introducing part of an analytical instrument, GC/MS 18 (or GC). In the drawings, reference numeral 19 denotes a separation column arranged between the sample introducing part and the analytical instrument 18. Here, electric signals are represented by the letter S.

A cooling device 20 and a heating device 21 are arranged vertically at an end 21 of the trapping conduit 17. The trapping conduit 17 is arranged by being embedded in a heat generating part of the heating device 21. A driving device 22 is mounted on the heating device 21.
The driving device 22 allows the heating device 21 to come into contact with and move away from the cooling device 20. Upon contact between the heating device 21 and the cooling device 20, the trapping conduit 17 and the sample contained therein, which are located at the contact area, are cooled. When the heating device 21 is separated from the cooling device 20, the trapping conduit 17 of the pipe section and the sample contained therein can be heated.

The cooling device 20 used in the embodiment is a free-piston type Stirling refrigerator serving as a cold storage refrigerator and using a Stirling refrigeration cycle. Therefore, the size and weight of the cooling device 20 are reduced. This refrigerator has the same operating principle as the Stirling refrigerator.
The cooling device 20 includes a cooling part for generating and discharging cold heat. The cooling part is provided on the upper side of a casing of the cooling device 20 as described later. The cooling part includes an endothermic casing around an expansion chamber described later, and also includes a cooling plate and heat-exchange means which are attached to an upper part of the endothermic casing.

A casing 23 of the cooling device 20 is filled with helium gas serving as refrigerant gas. The casing 23 is formed by pressing a stainless steel plate into cylinders with different diameters and then welding the cylinders together.
A cylinder 24 made by aluminum die casting is installed in the casing 23. An annular passage 25 is formed between the cylinder 24 and an upper endothermic casing 23a.
A regenerator 26 is arranged at the middle of the annular passage 25. The regenerator 26 is capable of absorbing or regenerating heat therearound. A lower part of the regenerator 26 communicates with a compression chamber described later, and is capable of exhausting heat. An upper part of the regenerator 26 communicates with an expansion chamber described later, and is capable of absorbing heat.

A piston 27 and a displacer 28 are slidably arranged inside the cylinder 24 while being spaced vertically apart from each other. A compression chamber 29 is formed between the piston 27 and the displacer 28. An expansion chamber 30 is formed immediately above the displacer 28.
A permanent magnet 31 is arranged below the cylinder 24. An electromagnetic coil 32 capable of conducting an alternating current is annularly arranged outside the permanent magnet 31. The permanent magnet 31 and the electromagnetic coil 32 constitute an electromagnetic driving mechanism 33 serving as a linear motor.

That is, an alternating electric field is generated by the alternating current being passed through the electromagnetic coil 32. This causes an electromagnetic force to act on the permanent magnet 31 in the axial direction thereof. As a result, the piston 27 moves toward the displacer 28. This allows the refrigerant gas in the compression chamber 29 to generate heat and to have a high pressure by being compressed.
After that, the pressurized gas is pushed into the annular passage 25 through a communicating hole 34 formed in the cylinder 24. The pressurized gas, from which heat has been exhausted into the annular passage 25, is turned into low-temperature gas by the regenerator 26. The resultant gas is introduced into the expansion chamber 30. The pressure of the gas acts on the displacer 28.
The displacer 28 is then pushed down to thereby increase the volume of the expansion chamber 30. As a result, the refrigerant gas is adiabatically expanded to absorb heat therearound, thereby decreasing the temperature of the expansion chamber 30. An upper end face, namely a cold head, of the endothermic casing 23a can be cooled to about 0°C to -190°C.

On the other hand, the piston 27 moves reciprocally and then downward so as to be away from the displacer 28. This causes the compression chamber 29 to have a negative pressure and thus to suck the low-temperature gas in the expansion chamber 30. The low-temperature gas flows to the regenerator 26 to absorb heat from the refrigerant gas. After that, the low-temperature gas flows back into the compression chamber 29 through the communicating hole 34 to push the displacer 28 upward.
In this manner, in the cooling device 20, the compression and expansion of the refrigerant gas are repeated during one cycle of motion of the piston 27. The Stirling refrigeration cycle is achieved in which two types of isothermal change and two types of isochor are achieved.

The drawing also illustrates a displacer rod 35 for controlling the operation of the displacer 28. The displacer rod 35 is connected to two plate springs 36 and 37. A heat-exchange flange 38 protrudes from a heat exhausting part of the endothermic casing 23a. A water jacket 38a is formed inside the flange 38. Water or cooling water circulates inside the jacket 38a.

A cooling plate 39 serving as the cooling part of the cooling device 20 is attached to the upper end face of the endothermic casing 23a that is to be cooled. The cooling plate 39 has substantially the same width as the casing 23. Heat-insulating blocks 40 are attached to both ends of the cooling plate 39 with small steps 41 therebetween.
The cooling plate 39 is formed of a metal part such as a stainless steel sheet having a high thermal conductivity and heat resistance. The heating device 21 can come into contact with the cooling plate 39.

Note that the cooling plate 39 may not be provided. In this case, the heating device 21 comes into direct contact with the upper end face of the endothermic casing 23a.
The heat-insulating block 40 is formed of a material having a low thermal conductivity, a high heat-insulating property, and a high mechanical strength. Examples of this material include zirconia (ZrO₂) which is engineering ceramics.

Meanwhile, the heating device 21 is constituted by a heating block 42 and a metal tubing 43 which are formed integrally or by molding. The entire lower surface of the heating block 42 can come into contact with the cooling plate 39. The metal tubing 43 is an electric heating part arranged at a part of the end of the trapping conduit 17. The heating block 42 and the metal tubing 43 constitute the heating part which generates and discharges heat. The outer surface of the metal tubing 43 is covered with an appropriate electric insulating part.
The heating block 42 is formed of metal having a high thermal conductivity, such as copper, stainless steel, aluminum, and titanium. The heating block 42 is in the shape of an elongated rectangular plate, for example. A contact part 42a, which is at the lower surface of the heating block 42 and faces the cooling plate 39, is formed to be flat.

The metal tubing 43 is formed of metal such as copper, stainless steel, aluminum, titanium, and tungsten. To be rapidly heated, the metal tubing 43 has a low heat capacity and is lightweight. The metal tubing 43 has a cylindrical shape. In this embodiment, the width of the cylinder is equal to or smaller than that of the heating block 42. The metal tubing 43 has substantially the same length as the cooling plate 39. Both ends of the metal tubing 43 respectively protrude from both ends of the heating block 42 by the same length.
The end of the trapping conduit 17 is partially embedded inside the metal tubing 43. With this configuration, a gas sample can be introduced into the trapping conduit 17.

The trapping conduit 17 is formed of a capillary tubing as described above. The inner diameter thereof is as small as 0.005 mm to 0.530 mm. In the embodiment, a fused silica capillary tubing or a metal capillary tubing is used. The outer surface of the fused silica capillary tubing is coated with polyimide. Examples of the metal capillary tubing include a stainless steel tubing, a copper tubing, and a titanium tubing each having an electric insulating layer on the outer surface thereof.
Lead wires 44 and 45 for direct current conduction are connected respectively to the both ends of the metal tubing 43. The metal tubing 43 generates heat and is heated to about 200°C through current conduction upon separation from the cooling device 20. The sample gas inside the trapping conduit 17 provided in the tubing 43 is heated, and the trapped sample trapped inside the trapping conduit 17 vaporizes again to become flowable.

The drawing illustrates a temperature sensor 46 arranged inside an end of the heating block 42. The temperature sensor can detect the temperature of the heating block 42. A detection signal from the sensor is transmitted to a control device (not illustrated) via a lead wire 47. Therefore, trapping of the gas sample and desorption of the trapped sample can be monitored and controlled.

A connecting plate 48 is attached to an upper end of the heating block 42. An actuator 49 serving as the driving device 22 is installed above the connecting plate 48. A distal portion of an extensible rod 50 of the actuator 49 is connected to the connecting plate 48.
The actuator 49 brings the contact part 42a of the heating block 42 into contact with the cooling plate 39 upon extension of the extensible rod 50. As a result, the heating block 42 is cooled, and the gas sample is liquefied to be trapped. Upon contraction of the extensible rod 50, on the other hand, the actuator 49 separates the heating block 42 from the cooling plate 39. As a result, the heating block 42 is heated and the gas sample vaporizes, whereby the trapped sample can be desorbed.

According to the present invention configured as described above, the quality of river water is analyzed by cooling, condensing and trapping the gas sample components, that is, the VOCs. The trapped sample is then desorbed by heating. This trapping method has the same principle as the conventional method. The method for introducing a sample to be trapped, the method for analyzing the trapped sample, and the apparatus and facility used for these methods are substantially the same as those used conventionally.
The heating/cooling part of the present invention used for trapping the sample includes the cooling device 20 and the heating device 21. The free-piston type Stirling refrigerator is applied to the cooling device 20. The heating device 21 can be brought into contact with, and separated from, the cooling device 20. The cooling device 20 is small and lightweight. In addition, the cooling device 20 has good operability and reduces the running cost compared to the conventional one using a refrigerant such as liquid nitrogen.

Furthermore, in the cooling device 20, the heating block 42 is brought into contact with the cooling plate 39 of the cooling part to directly cool the trapping conduit 17 that is arranged by being embedded in the heating block 42. Conventionally, therefore, a cooling pipe is arranged at the trapping part of the analytical instrument and extends from the refrigerator. Cold air is drawn from the refrigerator to the cooling pipe to perform cooling. In contrast, the cooling device 20 can perform quick and efficient cooling with a reduced loss in the cooling temperature. The rapid cooling can also be performed, and the cooling pipe is not required to be arranged. Therefore, the installation space for the cooling device 20, and the size and cost thereof can be reduced.

The heating device 21 employs an electric heating system. A part of the trapping conduit 17 is arranged inside the heating device 21. That is, the heating device 21 has a simple configuration, and is small and lightweight. The cooling device 20 paired with the heating device 21 does not include an electronic cooling element that is limited in terms of heat resistance. The heating temperature can thus be quickly set at a high value. Accordingly, the heating device 21 can perform rapid heating.
Therefore, the heating/cooling part of the present invention can perform rapid cooling and rapid heating. Furthermore, the heating/cooling part achieves cryofocusing in chromatography, specifically in gas chromatography. The heating/cooling part achieves local condensation through cooling by cryofocusing, and desorption by rapid heating. As a result, the sample is introduced into the separation column 19 with a narrow sample band. This results in favorable separation in the separation column 19 and high sensitivity.

In addition, the trapping conduit 17 is formed of a hollow capillary tubing, and is not packed with the adsorbing material or trapping material. This reduces the amount of carrier gas necessary for heating and desorbing target components to be analyzed, which are trapped in the trapping conduit 17. Therefore, there is no possibility that the sample components will be diluted by the carrier gas to widen the sample band.

Next, the purge-and-trap method employed in the sample trapping method and the sample trapping apparatus of the present invention will be described.
That is, a sample solution such as river water, namely a sample to be analyzed, is introduced into the sample tubing 2 by the sample supply pipe 1. The gas controller 7 introduces helium gas used as a purge gas into the sample tubing 2 from the purge gas conduit 6 via the purge gas tubing 5 and the conduit 4.
The sample tubing 2 is then heated, whereby the VOCs in the sample 3 vaporize. The sample gas fills a head space of the sample tubing 2 and is introduced into the switching valve 11 via the communicating pipe 10.

The sample gas then flows into the conduit 13 from the switching valve 11. The moisture remover 14 in the conduit 13 removes moisture in the gas. After that, the gas is introduced into the trapping tubing 15, and adsorbed and trapped onto the trapping material packed in the trapping tubing 15. The remaining sample is discharged from the guide conduit 12 through the vent. The switching valve 11 is then switched from the state illustrated in the drawing. As a result, the helium gas is introduced into the carrier gas conduit 16, the trapping tubing 15 is heated, and the adsorbed VOCs are desorbed and flushed back into the trapping conduit 17.

Meanwhile, the cooling device 20 is operated before the VOCs are introduced into the trapping conduit 17. The electromagnetic coil 32 is energized to drive the electromagnetic driving mechanism 33. As a result, the piston 27 moves reciprocally inside the cylinder 24, and the refrigerant gas in the compression chamber 29 is compressed to have a high pressure.
The pressurized gas is then pushed out into the annular passage 25 through the communicating hole 34. At this time, the heat of the heated pressurized gas is discharged into the annular passage 25. Water passes through, or cooling water circulates in, the water jacket 38a in the flange 38. As a result, heat exchange is promoted. The pressurized gas is introduced into the regenerator 26 and turned into a low-temperature gas. The resultant gas flows into the expansion chamber 30, and the pressure of the gas acts on the displacer 28.

As a result, the displacer 28 is pushed downward to increase the volume of the expansion chamber 30. The refrigerant gas is thus adiabatically expanded. The refrigerant gas absorbs heat therearound to decrease the temperature, and the upper end face of the endothermic casing 23a is cooled to about 0°C to -190°C.

Meanwhile, the piston 27 moves reciprocally and then downward so as to be away from the displacer 28. This causes the compression chamber 29 to have a negative pressure and thus to suck the refrigerant gas in the expansion chamber 30. The refrigerant gas flows to the regenerator 26, and flows back into the compression chamber 29 through the communicating hole 34 to push the displacer 28 upward.
In this manner, in the cooling device 20, the compression and expansion of the refrigerant gas are repeated during one cycle of motion of the piston 27. The Stirling refrigeration cycle is achieved in which two types of isothermal change and two types of isochor are achieved.

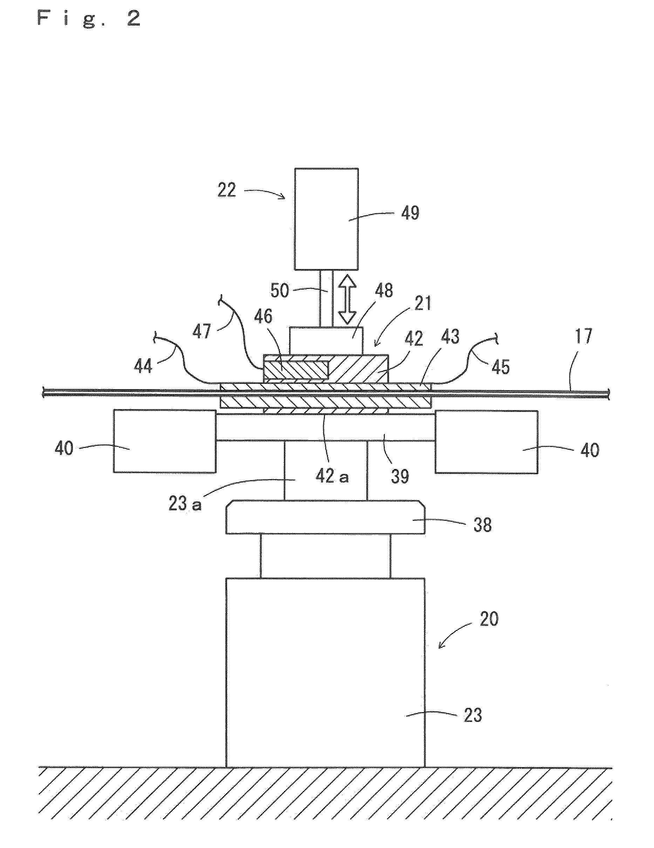

The actuator 49 is operated at the time of the cooling operation of the cooling device 20. This extends the extensible rod 50 and pushes the heating block 42 downward. As a result, the contact part 42a at the lower surface of the block is pressed against the cooling plate 39.
The cooling device 20 then performs the cooling operation to cool the upper end face of the endothermic casing 23a. When the cooling plate 39 is cooled, the heating block 42 and the metal tubing 43 are cooled by way of the contact part 42a. As a result, the trapping conduit 17 embedded in the tubing 43 is cooled. This operation is illustrated in Fig. 2. At this time, the heat-insulating blocks 40 block the heat transfer from the outside. This improves the cooling efficiency of the cooling plate 39.

During this operation, the adsorbed sample gas components are flushed back. The sample gas components are introduced into the trapping conduit 17 together with the carrier gas.
Upon reaching the metal tubing 43, the sample gas is rapidly cooled and liquefied. Furthermore, the sample gas is locally concentrated and trapped.
After that, the extensible rod 50 is contracted to pull the heating block 42 upward. As a result, the contact part 42a at the lower surface of the block is pulled up from the cooling plate 39 and stops being cooled by the cooling plate 39. At this time, a large current flows through the lead wires 44 and 45. This rapidly heats the metal tubing 43 and then the trapping conduit 17 embedded in the tubing 43.

The cooling plate 39 and the upper end face of the endothermic casing 23a are formed of a metal plate having a good thermal conductivity. That is, these parts are not formed of an electronic cooling element having a limited heat resistance unlike in the conventional case. Therefore, the metal tubing 43 can be heated to a high temperature without using the cooling plate 39. The distance to the cooling plate 39 can be minimized. After the heating block 42 is pulled up, therefore, the metal tubing 43 can be quickly heated. That is, the rapid heating of the tubing is achieved.
At this time, heat radiated from the heating block 42 is partially absorbed or blocked by the heat-insulating blocks 40. This suppresses the heating or temperature rise of the cooling plate 39. Therefore, loss of energy to be used for subsequent cooling of the cooling plate 39 is reduced.

The trapped sample thus rapidly heated is desorbed and introduced into the separation column 19 of the GC/MS 18 with a narrow sample band. Therefore, the trapped sample is separated while the widening of the sample band is suppressed. That is, the trapped sample is favorably separated with a high sensitivity.
After the sample gas is introduced into the GC/MS 18, the current stops flowing through the lead wires 44 and 45 of the heating device 21. As a result, the metal tubing 43 stops being heated.
After that, the extensible rod 50 of the actuator 49 is extended. Then, the contact part 42a at the lower surface of the heating block 42 is pressed against the cooling plate 39. The heating block 42 and the metal tubing 43 are thus cooled, whereby the trapping conduit 17 is cooled. As a result, the sample gas is locally concentrated and trapped.

The extensible rod 50 is then contracted to pull up the heating block 42. Thereby, the metal tubing 43 and the trapping conduit 17 are rapidly heated. As a result, the trapped sample is desorbed, and introduced into the separation column 19 of the GC/MS 18 with a narrow sample band and separated therein.
After that, the extension/contraction motion of the extensible rod 50 is repeated. With this motion, cold-trapping of the sample gas and heating/desorption of the trapped sample are repeated. As a result, the sample gas is introduced into the separation column 19.

Note that the intermittent energization or heating of the metal tubing 43 can be omitted. In this embodiment, the heating device 21 moves vertically with the cooling device 20 in a stationary state. Conversely, the cooling device 20 may move vertically with the heating device 21 in a stationary state. This can prevent the trapping conduit 17 from being oscillated or broken, and eliminate the influence exerted depending on how the peripheral devices are arranged.

Both the heating device 21 and the cooling device 20 may move vertically, that is, they may move closer to and away from each other. With this motion, the sample is quickly cooled and heated. As a result, the rapid cooling and the rapid heating of the sample are promoted.
Furthermore, the trapping conduit 17 may be arranged by being embedded in the cooling plate 39 of the cooling device 20, not in the heating device 21. With this configuration, the rapid cooling is promoted and the piping structure is made simple.

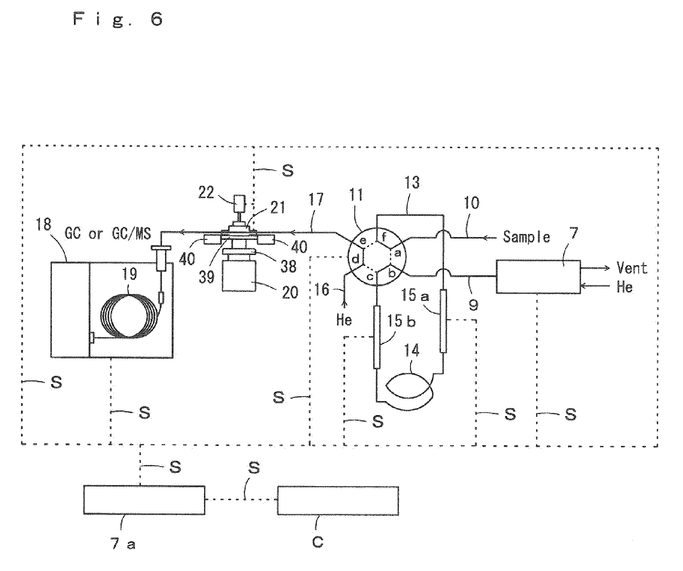

Figs. 6 to 16 illustrate other embodiments of the present invention. In these drawings, the same components as those in the above embodiment are denoted with the same reference numerals.
Fig. 6 illustrates a second embodiment. This embodiment is an example where the VOCs in the atmosphere are analyzed by a canister GC/MS. As illustrated in the drawing, one end of a communicating pipe 10 is connected to a sample supply source such as a canister. The sample supply source can contain the atmosphere containing the VOCs. The other end of the communicating pipe 10 is connected to the port a of a switching valve 11.

A drain pipe 9 is connected to the port b of the switching valve 11. Both ends of a conduit 13 are connected to the port c and the port f, respectively. The VOCs having different boiling points are adsorbed onto the conduit 13. First and second trapping tubings 15a and 15b, which can be heated, are connected to the conduit 13. A moisture removing device 14 is arranged between the trapping tubings 15a and 15b.
A carrier gas conduit 16 is connected to the port d. Helium gas used as carrier gas is introduced into the conduit 16. Furthermore, a trapping conduit 17 is connected to the port e. An end of the trapping conduit 17 is arranged in the heating device 21. The heating device 21 is arranged so as to come into contact with and move away from a cooling device 20.

The atmosphere containing the VOCs is trapped in the canister. The gas sample is taken out from the canister through a valve (not illustrated). The gas sample is sent to the switching valve 11 through the communicating pipe 10. The gas sample components are trapped in the first trapping tubing 15a or the second trapping tubing 15b depending on the boiling temperature thereof. The remaining sample 3 is discharged through the drain pipe 9.
The switching valve 11 is switched after the trapping. After the conduit 13 communicates with the trapping conduit 17, the first trapping tubing 15a or the second trapping tubing 15b are heated. The gas sample is thereby desorbed and introduced into the trapping conduit 17. The helium gas used as carrier gas is introduced into the carrier gas conduit 16. As a result, the sample gas is flushed back and introduced into the trapping conduit 17.

Meanwhile, the cooling device 20 is operated before the sample gas is introduced into the trapping conduit 17. With this operation, an upper end face of an endothermic casing 23a is cooled to about 0°C to -190°C. Furthermore, an extensible rod 50 of an actuator 49 is extended. A contact part 42a of a heating block 42 is thereby pressed against a cooling plate 39. As a result, the heating block 42 and a metal tubing 43 are cooled, thereby cooling the trapping conduit 17. Consequently, the sample gas is locally concentrated and cold-trapped.

After that, the extensible rod 50 is contracted to pull up the heating block 42. With this motion, the metal tubing 43 and the trapping conduit 17 are rapidly heated. As a result, the adsorbed sample is desorbed, and introduced into the separation column 19 of the GC/MS 18 with a narrow sample band and separated therein.
After that, the extension/contraction motion of the extensible rod 50 is repeated. With this motion, cold-trapping of the sample gas and heating/desorption of the adsorbed sample are repeated. As a result, the sample gas is separated in the separation column 19.

In this manner, in this embodiment, the sample components in the atmosphere are adsorbed onto the plurality of trapping tubings 15a and 15b. The qualitative and quantitative analyses of various organic compounds ranging from low-boiling-point components to high - boiling-point components can be continuously and automatically performed in the following manner. That is, one of the trapping tubings 15a and 15b is selected and heated to thereby desorb the sample components, and the sample components are introduced into the separation column 19 of the GC or GC/MS 18 and separated therein.

When the number of the trapping tubings 15a and 15b or the amount of the trapping materials used increases, the amount of carrier gas necessary for heating and desorbing the trapped target components to be analyzed increases. As a result, a problem with the sample diluting and the sample band-widening is suffered.
The trapping tubings 15a and 15b have a large heat capacity. This makes it difficult to instantaneously heat the tubings to an optimum desorbing temperature. Therefore, the desorption occurs gradually before the tubings reach the optimum desorbing temperature. That is, there is generated a desorption time distribution. This causes a problem in that the sample band widens.
In this embodiment, as described above, the cooling device 20 is rapidly cooled in order to concentrate the widened sample band. In addition, condensation trapping by cryofocusing is achieved. Furthermore, the heating device 21 is rapidly heated to achieve desorption. As a result, introduction into the separation column 19 is achieved with a narrow bandwidth. This solves the above problem.

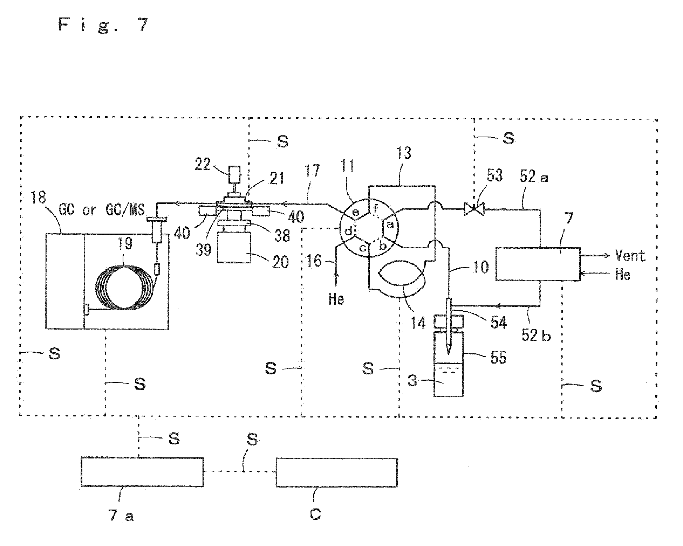

Fig. 7 illustrates a third embodiment. In this embodiment, both a static head space method and a dynamic head space method can be used. In the dynamic head space method, purge gas is introduced to purge gas-phase components, and the purge gas is trapped on a trapping tubing packed with a trapping material.
That is, in the static head space method, inert gas such as helium gas is introduced into a pressurizing conduit 52a by a gas controller 7. The gas is introduced into the port a of a switching valve 11 via a on-off valve 53. A communicating pipe 10 connected to a needle 54 is connected to the port b.
The needle 54 is inserted into a sealed vessel 55 such as a vial that can be heated. An injecting/sucking port of the needle is arranged inside the vessel 55. The sealed vessel 55 contains a liquid sample 3 containing VOCs.

Both ends of a conduit 13 are connected to the port c and the port f of the switching valve 11, respectively. A carrier gas conduit 16 is connected to the port d. A trapping conduit 17 is connected to the port e. An end of the trapping conduit 17 is arranged in the heating device 21. The heating device 21 is arranged so as to come into contact with and move away from a cooling device 20. The drawing illustrates a pressurizing conduit 52b that connects the needle 54 and the gas controller 7.

In this embodiment, the liquid sample 3 is stored in the vessel 55 and the vessel 55 is sealed. After that, the vessel 55 is heated and volatile components in the liquid sample 3 vaporize. As a result, the sample gas fills an upper space (hereinafter referred to as "head space") inside the vessel 55 and is introduced into the conduit 13.
The switching valve 11 is then switched. With this switching, the carrier gas is introduced into the carrier gas conduit 16 and flows into the conduit 13. The sample gas loaded in the conduit 13 is introduced into the trapping conduit 17.

Meanwhile, the cooling device 20 is operated before the sample gas is introduced into the trapping conduit 17. With this operation, an upper end face of an endothermic casing 23a is cooled to about 0°C to -150°C. As a result, an extensible rod 50 of an actuator 49 is extended, and a contact part 42a of a heating block 42 is pressed against a cooling plate 39.
The heating block 42 and a metal tubing 43 are then cooled, whereby the trapping conduit 17 is cooled. As a result, the sample gas is locally concentrated and trapped.

After that, the extensible rod 50 is contracted to pull up the heating block 42. With this motion, the metal tubing 43 and the trapping conduit 17 are rapidly heated. As a result, the adsorbed sample is desorbed, introduced into a separation column 19 of a GC/MS 18 with a narrow sample band and separated therein.
After that, the extension/contraction motion of the extensible rod 50 is repeated. With this motion, trapping of the sample gas and heating/desorption of the adsorbed sample are repeated. As a result, the sample gas is introduced into the separation column 19.

In the dynamic head space method, on the other hand, the sealed vessel 55 containing the liquid sample 3 is heated. As a result, the VOCs in the liquid sample 3 vaporize. Meanwhile, the carrier gas is introduced into the vessel 55 through the pressurizing conduit 52b. The VOCs in the vessel 55 are introduced, together with the carrier gas and through the communicating pipe 10, into the conduit 13. The moisture remover 14 and the trapping tubing (not shown), which is disposed adjacent to the moisture remover 14, is provided in the conduit 13. As a result, the VOC components are trapped by the trapping tubing.
After that, heating/desorption, and switching of the switching valve 11 are achieved. The carrier gas is introduced into the carrier gas conduit 16 and flows into the conduit 13. The VOCs trapped in the trapping tubing are introduced into the trapping conduit 17.

Meanwhile, the cooling device 20 is operated before the sample gas is introduced into the trapping conduit 17. With this operation, the upper end face of the endothermic casing 23a is cooled to about 0°C to -190°C. The extensible rod 50 of the actuator 49 is extended, and the contact part 42a of the heating block 42 is pressed against the cooling plate 39.
The heating block 42 and the metal tubing 43 are then cooled, whereby the trapping conduit 17 is cooled. As a result, the sample gas is locally concentrated and cold-trapped.

After that, the extensible rod 50 is contracted to pull up the heating block 42. With this motion, the metal tubing 43 and the trapping conduit 17 are rapidly heated, and the adsorbed sample is desorbed and introduced into the separation column 19 of the GC/MS 18 with a narrow sample band.

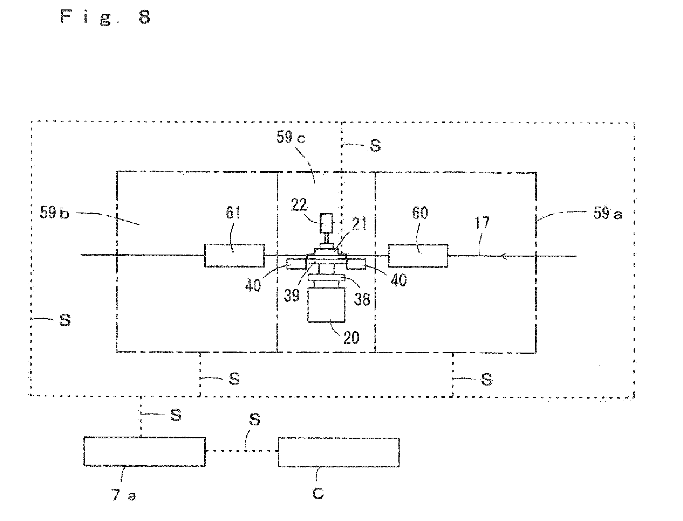

Fig. 8 illustrates a fourth embodiment. This embodiment is applied to cryofocusing in two-dimensional gas chromatography (GC×GC).
In this embodiment, a trapping conduit 17 is arranged in a thermostat 59 of each of one or a plurality of gas chromatographs GCs. A one-dimensional separation column 60 and a two-dimensional separation column 61 are connected in series to the trapping conduit 17. The heating device 21 and the cooling device 20 are vertically arranged between the separation columns 60 and 61. Furthermore, the trapping conduit 17 is arranged by being embedded in the heating device 21. The heating device 21 is arranged so as to come into contact with and move away from the cooling device 20.

The sample gas separated in the one-dimensional separation column 60 is rapidly cooled by the cooling device 20, and concentrated and trapped by cryofocusing. After that, the heating device 21 is rapidly heated and the adsorbed sample is desorbed. The adsorbed sample is introduced into the two-dimensional separation column 61 with a narrow bandwidth. As a result, a high peak separation resolution can be obtained.

As illustrated in the drawing, thermostats 59a, 59b, and 59c of three gas chromatographs GCs are set to different temperatures, respectively. The one-dimensional separation column 60 and the two-dimensional separation column 61 are arranged in the thermostats 59a and 59b at both ends, respectively. The heating device 21 and the cooling device 20 are vertically arranged in the thermostat 59c or installation space between the above thermostats.

As described above, the cooling device 20 and the heating device 21 are both small and lightweight. Therefore, the installation space can be reduced compared to the conventional cooling method using two-dimensional gas chromatography in which liquid nitrogen or liquefied carbon dioxide is blown. Furthermore, the rapid cooling and the rapid heating can be achieved locally. Therefore, the cooling device 20 and the heating device 21 are suitable for cryofocusing. The cooling device 20 and the heating device 21 are arranged in the installation space instead of the thermostat 59c. With this configuration, the facility cost can be reduced and the configuration can be simplified.
Furthermore, in an applied form of this embodiment, the two thermostats 59a and 59b are adjacent to each other with the intermediate thermostat 59c omitted. In addition, the one-dimensional separation column 60 or the two-dimensional separation column 61 is arranged in each of the thermostats 59a and 59b. Then, the cooling device 20 and the heating device 21 are arranged at the side of an inlet or an outlet of the one-dimensional separation column 60 or the two-dimensional separation column 61.
The sample before being introduced into the one-dimensional separation column 60 or the separated sample is concentrated and trapped. After that, the heating device 21 is rapidly heated and the adsorbed sample is desorbed. As a result, the adsorbed sample is introduced into the one-dimensional separation column 60 or the two-dimensional separation column 61 with a narrow bandwidth and separated therein. Alternatively, the sample separated in the one-dimensional separation column 60 or two-dimensional separation column 61 is concentrated and trapped. After that, the heating device 21 is rapidly heated and the adsorbed sample is desorbed. As a result, the adsorbed sample is introduced into the two-dimensional separation column 61 with a narrow bandwidth. Alternatively, the sample separated in the separation column 61 can be introduced into the analytical instrument.

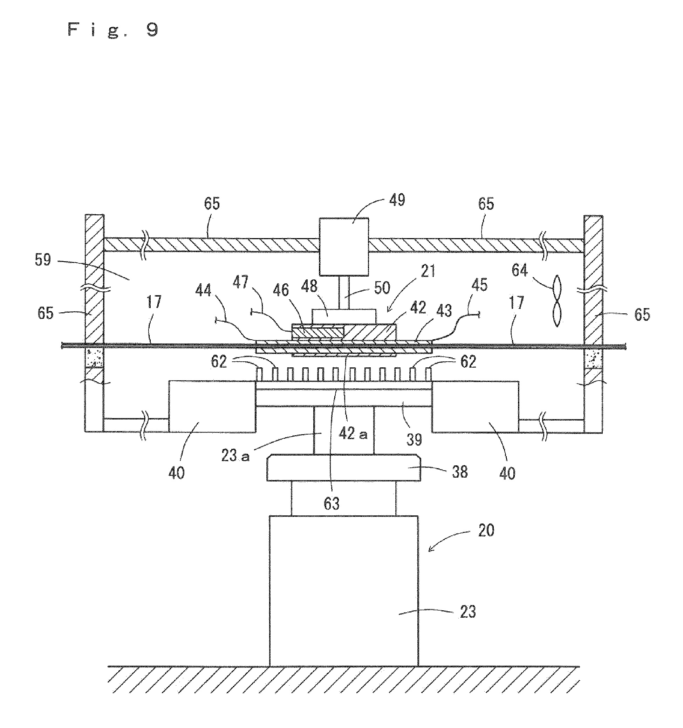

Figs. 9 to 11 illustrate a fifth embodiment. The present invention is applied to this embodiment for cooling or heating a thermostat 59.
That is, in this embodiment, a cooling plate 39 of the cooling device 20 is arranged to meet the inner surface (for example, lower surface) of the thermostat 59. An endothermic plate 63 provided with a number of endothermic fins 62 is installed on the cooling plate 39. The endothermic plate 63 serves as heat-exchange means. A fan 64 is provided at an appropriate position in the thermostat 59. This enables heat exchange and circulation of air. That is, the thermostat 59 is quickly cooled, and the cooling efficiency thereof is improved.

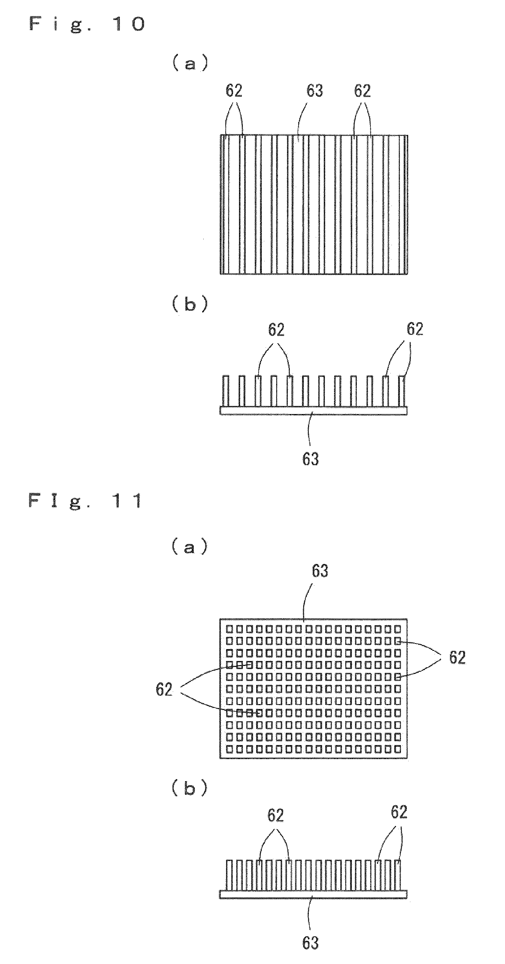

In this configuration, the heating device 21 may be arranged while being fixed or vertically movable immediately above the endothermic fins 62. In this case, the sample gas introduced into the trapping conduit 17 is cold-trapped. After that, the trapping conduit 17 is heated and the trapped sample is desorbed. The drawing illustrates a highly heat-insulating peripheral wall 65 that partitions the peripheral part of the thermostat 59.
The endothermic fins 62 may have various shapes. The endothermic fins 62 are in the shape of elongated comb teeth in Fig. 10, and in the shape of pillars in Fig. 11. With these configurations, a heat-exchanging surface area is increased.

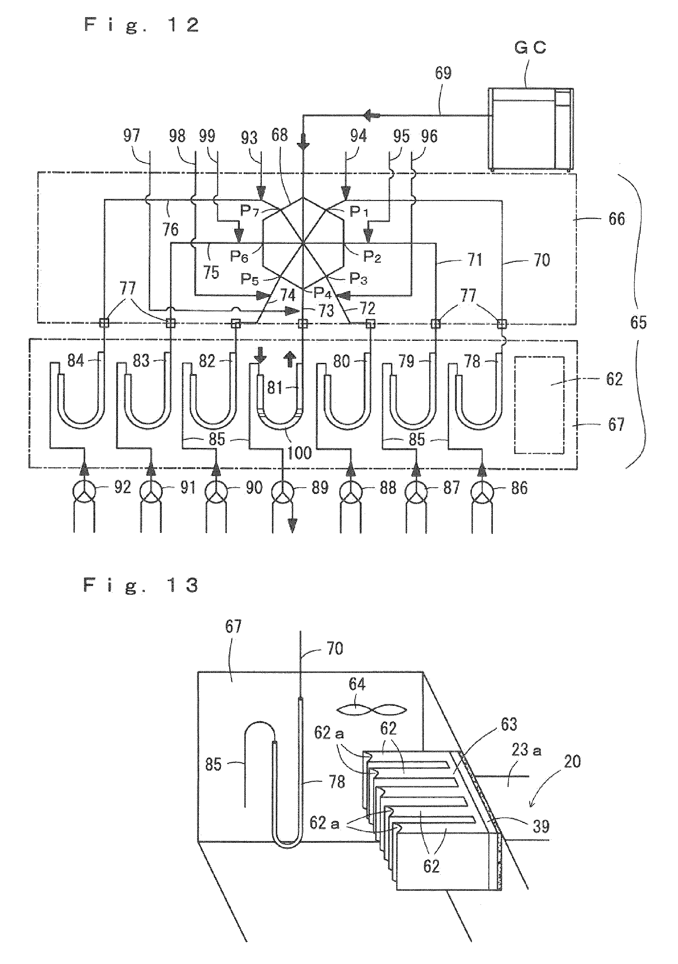

Figs. 12 and 13 illustrate a sixth embodiment. In this embodiment, sample components are cooled in an intermediate-to-low-temperature thermostat of a preparative gas chromatography GC device.
That is, a preparative device 65 is arranged close to a gas chromatograph. A high-temperature thermostat 66 and an intermediate-to-low-temperature thermostat 67 are vertically arranged in the preparative device 65. The interior of the high-temperature thermostat 66 can be heated up to 300°C. The interior of the intermediate-to-low-temperature thermostat 67 can be cooled to about -20°C.

A cooling plate 39 of the cooling device 20 is attached to one inner side surface of the intermediate-to-low-temperature thermostat 67 via a heat-insulating part. With this configuration, cold heat is not transferred to the peripheral wall. Furthermore, a concave groove 62a is formed at a distal portion of each wide endothermic fin 62. The groove 62a faces a dispensing tubing, serving as a sample conduit, described later. In the case where the sample gas to be introduced into the dispensing tubing has a high boiling temperature, the dispensing tubing is arranged apart from the groove 62a.
A fan 64 is provided at an appropriate position in the intermediate-to-low-temperature thermostat 67. The heat conduction and heat radiation of the endothermic fins 62 cool the dispensing tubing. Furthermore, cold air circulates to thereby cool the interior of the thermostat 67 uniformly.
With this configuration, the size and weight of the apparatus can be reduced and the cooling capability can be improved, compared to the conventional cooling method in which an electronic cooling element is used, a cooling water pipe is arranged, or liquid nitrogen is introduced into a cooling part. Furthermore, an increase in the running cost can be suppressed.

Two manifolds are provided inside the high-temperature thermostat 66. One manifold 68 is connected to a transfer line 69 that communicates with the gas chromatograph. Eluted sample components can be introduced into a separation column (not illustrated) of the gas chromatograph through the transfer line 69.
The manifold 68 includes seven component outlet ports P₁ to P₇ that communicate with the transfer line 69 and seven gas injection ports (not illustrated) that communicate with the other manifold (not illustrated). One ends of connecting tubings 70 to 76 are connected to the component outlet ports P₁ to P₇, respectively. The other ends of the tubings are connected to connecting joints 77. Dispensing tubings 78 to 84 made of transparent glass are connected to the joints 77.

The dispensing tubings 78 to 84 are arranged in the intermediate-to-low-temperature thermostat 67. These tubings have the same, substantially U-shape. Discharge pipes 85 are connected to one ends of the tubings. Three-way solenoid valves 86 to 92 are connected to downstream ends of the discharge pipes 85, respectively. Inert carrier gas is introduced into connecting tubings (not illustrated) that communicate with normally open ports of the valves. The gas can be pressurized and introduced into the downstream ends of the dispensing tubings 78 to 84.
The drawing illustrates pressing gas distributing pipes 93 to 99. The pressing gas distributing pipes connect six gas ports that communicate with a head pressing gas source provided in the other manifold and the seven gas injection ports (not illustrated) provided in the manifold 68. The drawing also illustrates liquefied sample gas components (liquid components) 100 stored in the dispensing tubing 81.

When the preparative device 65 is used, the high-temperature thermostat 66 and the intermediate-to-low-temperature thermostat 67 are set to predetermined temperatures. The sample components are separated in the separation column (not illustrated) of the gas chromatograph and vaporized. The vaporized sample components flow through the transfer line 69 while being separated from each other, and are introduced into the manifold 68 of the preparative device 65.
At this time, when the peak of the components held for the shortest time is detected by a detector (not illustrated) of the gas chromatograph, the solenoid valve 86 corresponding to the dispensing route of the low-boiling-point components is opened. As a result, the carrier gas from the gas chromatograph is introduced into the dispensing tubing 78 together with head pressing gas and back pressing gas.

The components held for the short time are introduced into the connecting tubing 70 through the outlet port P₁ together with the carrier gas. After that, the components are heated by flowing through the high-temperature thermostat 66. The components then flow into the intermediate-to-low-temperature thermostat 67 through the connecting joint 77. Furthermore, the components flow into an upper end of the dispensing tubing 78, and are gradually cooled and liquefied. The liquid droplets are stored in the dispensing tubing 78.

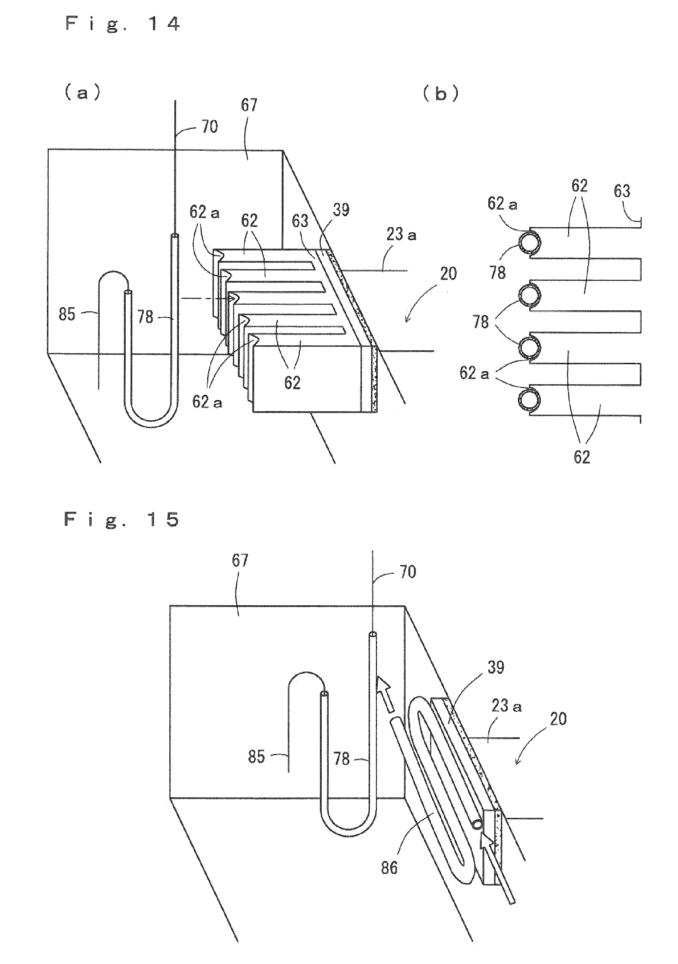

Fig. 14 illustrates an applied form of the sixth embodiment. This applied form corresponds to an analysis of sample gas as low-boiling-point components. As illustrated in Fig. 14(b), a dispensing tubing 78 is arranged in close contact with a groove 62a of the endothermic fin 62. The surface temperature of the groove 62a is -60°C or less, whereby the cooling capability is enhanced. Therefore, the dispensing tubing 78 is quickly cooled. Furthermore, the installation space for the dispensing tubing 78 is reduced to reduce the size of the intermediate-to-low-temperature thermostat 67.
In the case where components having a lower boiling point than the above components are analyzed, the endothermic fin 62 is omitted, and the dispensing tubing 78 is arranged directly on the cooling plate 39. With this configuration, the cooling efficiency is improved. That is, the cooling capability is improved and rapid cooling is achieved. In this case, the cooling efficiency and cooling capability are further improved by arranging the dispensing tubing 78 in close contact with the groove 62a of the endothermic fin 62 as illustrated in Fig. 14(b). As a result, rapid cooling of the low-boiling-point components is promoted.

Fig. 15 illustrates a modification of another applied form of the sixth embodiment. In this applied form, a cooling plate 39 is attached to one inner side surface of an intermediate-to-low-temperature thermostat 67. A blower tubing 86 (for example, copper tubing) that has a high thermal conductivity and is bent and curved into a substantially S-shape is attached to the cooling plate 39. Inert gas is introduced into one end of the blower tubing 86. The gas is discharged from the other end of the blower tubing 86 and blown onto a dispensing tubing 78. As a result, the dispensing tubing 78 is cooled.

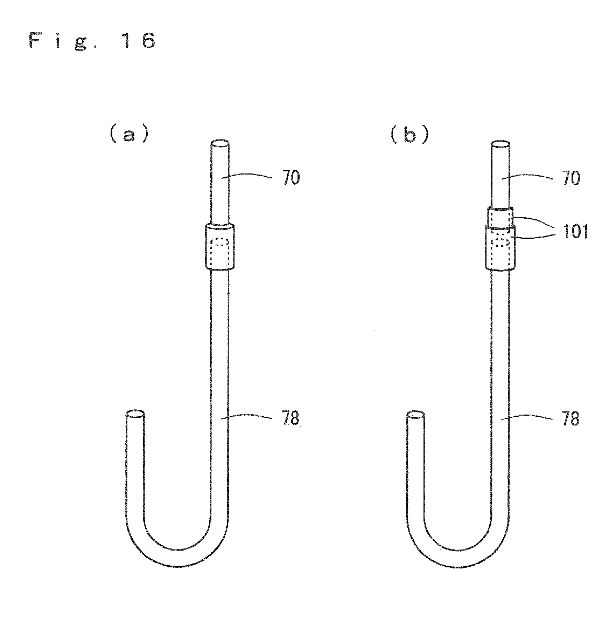

Fig. 16 illustrates another applied form of the sixth embodiment. In this applied form, a method for tightly coupling dispensing tubings 78 to 84 to connecting tubings 70 to 76 is illustrated.
In this case, the dispensing tubings 78 to 84 are made of metal, not glass, and thus have a good thermal conductivity. The inner surface of a coupling portion of the tubing is deactivated. These tubings are respectively coupled to the connecting tubings 70 to 76 made of glass and having a low thermal conductivity.

Lower ends of coupling portions of the connecting tubings 70 to 76 are then fused. As a result, as illustrated in Fig. 16(a), the lower ends are formed to have a different (larger) diameter. The lower ends are tightly coupled to upper ends of the dispensing tubings 78 to 84.
Fig. 16(b) illustrates another coupling method. In this coupling method, a joint tubing 101 made of synthetic resin and having a low thermal conductivity is used as the coupling portion. The joint tubing is subjected to heat shrinkage and formed to have different diameters. The joint tubing can be tightly coupled to each upper end of the dispensing tubings 78 to 84.

Note that any of the cooling devices 20 according to the above embodiments is the Stirling refrigerator based on the Stirling refrigeration cycle. Alternatively, a cold storage refrigerator such as the Gifford-McMahon refrigerator, the pulse-tubing refrigerator, the Vuilleumier refrigerator, or the Solvay refrigerator can be used. The pulse-tubing refrigerator is a Stirling refrigerator that does not have a movable part such as a piston in an expansion portion.

### INDUSTRIAL APPLICABILITY

As described above, in the present invention, the sample is cooled not by a refrigerant such as liquid nitrogen but by a cold storage refrigerator such as the Stirling refrigerator or the Gifford-McMahon refrigerator. Therefore, the operability is improved and the running cost is reduced. In addition, a refrigerant pipe is not used in the present invention. It is thus possible to reduce the size and weight of the apparatus, to improve the efficiency and accuracy for cooling the sample, and to rapidly cool the sample. Furthermore, it is possible to rapidly heat the sample. As a result, the trapped sample is instantaneously desorbed. This makes it possible to achieve cryofocusing in gas chromatography (particularly in high-speed gas chromatography). Therefore, the present invention is suitable for analysis by, for example, a GC/MS.

### DESCRIPTION OF REFERENCE SIGNS

- 17: Sample conduit (trapping conduit)
- 20: Cooling device
- 23a: Cooling part (endothermic casing)
- 39: Cooling part (cooling plate)
- 42: Heating part (heating block)
- 43: Heating part (metal tubing)
- 59: Thermostat
- 60: Separation column (one-dimensional separation column)
- 61: Separation column (two-dimensional separation column)
- 62: Cooling part (endothermic fin)
- 62a: Groove
- 63: Cooling part (endothermic plate)
- 67: Thermostat
- 78 to 84: Sample conduit (dispensing tubing)

## Claims

1. A sample trapping method using a sample conduit for trapping a gas sample by cooling or desorbing the gas sample by heating, the method comprising:
cooling the sample conduit by arranging the sample conduit in the vicinity of, or bringing the sample conduit into contact with, a cooling part of a cooling device based on a cold storage refrigerator.

2. The sample trapping method according to claim 1, wherein a heating part of a heating device is arranged to meet the cooling part, and is heated after the gas sample is cooled.

3. The sample trapping method according to claim 1 or 2, wherein the sample conduit is cooled or heated by moving any one or both of the cooling part and the heating part closer to, and away from, the sample conduit.

4. The sample trapping method according to claim 1 or 2, wherein the sample conduit is arranged by being embedded in any one of the cooling part and the heating part to cool or heat the sample conduit.

5. The sample trapping method according to claim 3 or 4, wherein the sample conduit is cooled and heated rapidly to cryofocus the gas sample, and the trapped sample is desorbed.

6. The sample trapping method according to claim 1, wherein the sample conduit is a hollow capillary tubing.

7. The sample trapping method according to claim 2, wherein the sample conduit and one or a plurality of separation columns are arranged in one or a plurality of gas chromatographic thermostats, the cooling part and the heating part are arranged to meet the sample conduit between the separation columns, and the separated gas sample is cooled and heated.

8. The sample trapping method according to claim 1, wherein in a purge-and-trap method, a head space method, or preparative gas chromatography, a low-concentration gas sample containing volatile components or semivolatile components is trapped.

9. A sample trapping apparatus comprising a sample conduit for trapping a gas sample by cooling or desorbing the gas sample by heating,
wherein the sample conduit is cooled by being arranged in the vicinity of, or being brought into contact with, a cooling part of a cooling device based on a cold storage refrigerator.

10. The sample trapping apparatus according to claim 9, wherein a heating part of a heating device is arranged near the cooling part, any one or both of the cooling part and the heating part are provided to be movable closer to and away from the sample conduit, and the sample conduit is provided so as to be cooled and heated.

11. The sample trapping apparatus according to claim 9 or 10, wherein the sample conduit is embedded in the cooling part or the heating part.

12. The sample trapping apparatus according to claim 9 or 11, wherein an outer surface of the sample conduit is partially covered with an electric heating part, and an electric insulating part is provided on an outer surface of the electric heating part or between the heating part in which the electric heating part is embedded and the electric heating part.

13. The sample trapping apparatus according to claim 9, wherein the sample conduit and the cooling part are arranged in a thermostat for preparative gas chromatography, and the sample conduit is in close contact with or apart from the cooling part such that the sample conduit can be cooled.

14. The sample trapping apparatus according to claim 13, wherein a metallic sample conduit having an deactivated inner surface is arranged in the thermostat for preparative gas chromatography, the cooling part includes a groove in which the sample conduit can be arranged, and the sample conduit is in close contact with or apart from the groove such that the sample conduit can be cooled.

15. The sample trapping apparatus according to claim 9, wherein the sample conduit, the cooling part, and the heating part are arranged in a thermostat.

16. The sample trapping apparatus according to claim 15, wherein the sample conduit and one or a plurality of separation columns are arranged in one or a plurality of gas chromatographic thermostats, and the cooling part and the heating part are arranged to meet the sample conduit between the separation columns.

17. The sample trapping apparatus according to claim 9, wherein the cooling device is based on a Stirling refrigerator or a Gifford-McMahon refrigerator.
